## Europäisches Patentamt

## European Patent Office

## Office européen des brevets

(19)

(11) Publication number: **0 232 685**
**B1**

(12) # EUROPEAN PATENT SPECIFICATION

(45) Date of publication of the patent specification:
25.01.89

(51) Int. Cl.⁴: **B60N 1/02**

(21) Application number: **86830383.5**

(22) Date of filing: **29.12.86**

(54) Adjustment device for motor vehicle seats.

(30) Priority: **14.01.86 IT 6702886**

(43) Date of publication of application:
**19.08.87 Bulletin 87/34**

(45) Publication of the grant of the patent:
**25.01.89 Bulletin 89/4**

(84) Designated Contracting States:
**DE ES FR GB SE**

(56) References cited:
**EP-A- 0 029 997**
**FR-A- 1 460 071**
**FR-A- 1 462 408**
**FR-A- 2 078 927**
**GB-A- 884 266**
**US-A- 2 555 804**
**US-A- 2 583 349**
**US-A- 3 295 889**
**US-A- 3 356 413**

(73) Proprietor: **FIAT AUTO S.p.A., Corso Giovanni
Agnelli 200, I-10135 Torino(IT)**

(72) Inventor: **Rovero, Giuseppe, Corso Giovanni Agnelli 119,
I-10134 Torino(IT)**
Inventor: **Stacchino, Giuseppe, Via Tiepolo 10,
I-10024 Moncalieri (Torino)(IT)**

(74) Representative: **Bosotti, Luciano et al, c/o
Jacobacci-Casetta & Perani S.p.A. Via Alfieri, 17,
I-10121 Torino(IT)**

ACTORUM AG

## Description

The present invention relates to adjustment devices for motor vehicle seats and concerns particularly a motor-driven adjustment device intended to be associated with a motor vehicle seat comprising a cushion which can be moved longitudinally relative to the structure of the vehicle, and a back selectively orientable relative to the cushion.

There are already known and used in the automobile industry seats provided with motor-driven adjustment devices which permit the automatic modification of the longitudinal position of the seat within the passenger compartment and of the attitude of the cushion and the back of the seat.

The above are generally rather complex and costly devices in which at least one motor (typically an electric motor) is used for each movement function.

The complexity, and the resultant high cost, have so far restricted the employment of such automatic adjustment devices to special vehicles or to top-class motor vehicles.

The need exists, therefore, to supply a device for the adjustment of motor vehicle seats which is structurally simple and can be produced at limited cost, so that it can even be fitted to medium class and cheap motor vehicles.

The object of the present invention is to meet this need.

According to the present invention this object is achieved by means of an adjustment device for motor vehicle seats of the type defined above, characterised in that it comprises:
– at least one swing arm with a lower point of hinging to the structure of the vehicle, an intermediate point of hinging to the cushion, and an upper point of hinging to the back;
– a selectively actuable motor unit;
– a first motion transmission mechanism interposed between the motor unit and the cushion of the seat, for causing, as a result of the actuation of the motor unit, the longitudinal movement of the cushion relative to the structure of the vehicle and a consequent angular displacement of the swing arm relative to the structure of the vehicle;
– a second motion transmission mechanism interposed between the motor unit and the back of the seat, for causing, as a result of the actuation of the motor unit, an angular displacement of the back relative to the swinging arm substantially identical and opposite to the consequent angular displacement of the swing arm relative to the structure of the motor vehicle, so as to keep the back in a substantially constant orientation relative to the structure of the motor vehicle, and
– disengagement means for the selective separation of the first motion transmission mechanism from the motor unit, so as to cause, as a result of the actuation of the motor unit, the orientation of the back relative to the swing arm and the cushion held in a fixed position relative to the structure of the motor vehicle.

The device according to the invention therefore permits, with the use of only one motor unit two distinct adjustment functions, namely:

– the adjustment of the longitudinal position of the seat relative to the structure of the motor vehicle, and
– the adjustment of the orientation of the back relative to the cushion.

In addition, the presence of the swing arm, which is connected to the structure of the vehicle at its lower end, to the cushion in its central zone, and to the back at its upper end, also brings about, during the movement for adjusting the position of the seat in the longitudinal direction, an action of adjustment of the useful length of the upper surface of the cushion.

Indeed, when the swing arm is oriented angularly about its lower point of hinging to the structure of the motor vehicle, the cushion, which is held by the intermediate portion of the swing arm, describes a displacement path whose amplitude is a fraction of the amplitude of the path simultaneously described by the back joined to the upper end of the swing arm. Thus, when the seat is moved backwards, the back describes a backward path which is longer than the backward path of the cushion. Similarly, when the seat is moved forward, the back follows a forward path of greater amplitude than the forward path of the cushion.

The overall result thus obtainable is an increase in the actual length of the upper surface of the cushion when the seat is moved back, and a reduction of this length when the seat is moved forward. In this way, it is possible to obtain a more precise adaptation of the configuration of the seat to the anthropometric characteristics of the users, preventing the thighs from being inadequately supported when the users are tall (seat moved back), and the occurrence of the phenomenon commonly called "raised limb" when the users are small (seat moved forward). In addition, the path of swinging of the arm may be selected in such a way as to impart to the cushion, during the displacement movement, a corresponding tilting movement which produces a lifting of the rear area of the cushion when the seat is moved forward, and a lowering of this area when the seat is moved back. In this way, it is possible to ensure the correct support of the lumbosacral region of the user in every adjustment position, and also to ensure, in the case of the driver's seat, that the point of vision is kept at practically constant height.

The invention will now be described, purely by way of non-limiting example, with reference to the appended drawings, in which:

Figures 1 to 3 show a motor vehicle seat fitted with an adjustment device according to the invention, and

Figures 4 shows the structure of the device according to the invention in greater detail.

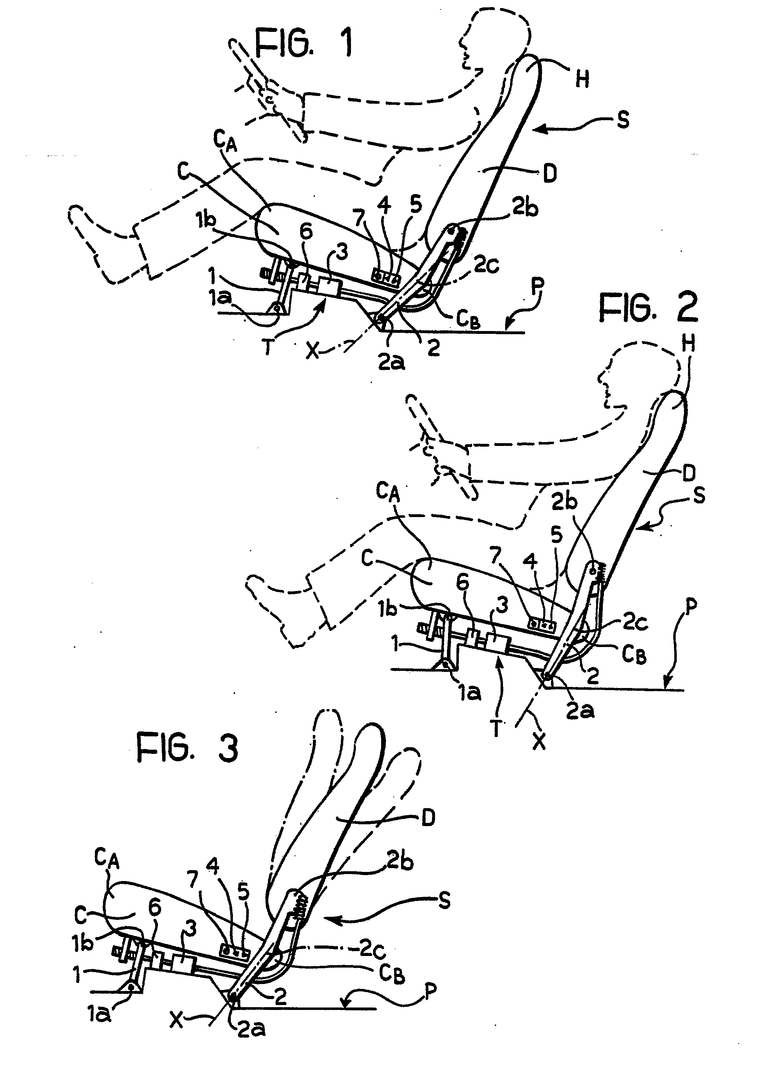

In Figures 1 to 3, a seat, indicated S, is intended to be mounted on the floor P of the passenger compartment of a motor vehicle, not illustrated in its entirety.

In correspondence with the seat S, the floor P preferably has a rib or cross member T.

In the seat S as a whole, it is possible to distinguish a sitting plane C (termed the "cushion" below, for brevity) and a back D provided at its upper end with a headrest H.

The seat S is supported on the floor P by an arrangement of swing arms disposed both sides of the seat.

The swing arms associated with only one side of the seat S can be seen in drawings. A substantially identical arrangement of arms is present on the other side of the seat. According to a solution widely known in itself, at least some of the equivalent arms on the two sides of the seat are joined together by transverse stiffening members in a generally forkshaped configuration.

The cushion C, in which it is possible to distinguish generally a front portion $C_A$ and a rear portion $C_B$, is supported at each of its sides by a first swing arm 1 and a second swing arm 2 which also supports the lower end of the back D.

More precisely, in the arm 1 which supports the cushion C in correspondence with its front area $C_A$, it is possible to distinguish:
a lower end 1a defining a point of hinging of the arm to the floor P of the passenger compartment at the front of the cross member T, and
an upper end 1b defining a point of hinging to the cushion C.

On the other hand, in the second swing arm 2, it is possible to distinguish:
– a lower end 2a defining a point of hinging of the arm to the floor P of the passenger compartment at the rear of the cross member T;
– an upper end 2b in correspondence with which the arm 2 is joined to the back D, and
– an intermediate zone 2c in which the arm 2 is hinged to the rear area $C_B$ of the cushion C.

The arm 2 has a generally angled configuration.

In particular, the lower end 2a and the intermediate zone 2c are in relative positions such that, when the seat S is in its most rearward position (which is that illustrated in Figure 1), the lower hinging point defined by the end 2a and the point where the cushion C is hinged to the intermediate zone 2c are aligned along a straight line X forming an angle of the order of 45–60° relative to the vertical.

When the seat 1 is moved towards its most forward position (which is that shown in Figure 2), passing through a series of intermediate positions (one of which is shown in Figure 3), the straight line X moves gradually closer to the vertical.

The overall effect thus obtainable is that of a raising of the rear area $C_B$ of the cushion C when the seat S is moved forward, and a lowering of this area when the seat S is moved back.

In addition, the fact that the cushion C is joined to the arm 2 in correspondence with the intermediate area 2c while the back D is supported by the upper end 2b of the arm means that, when the seat is moved longitudinally relative to the structure of the motor vehicle, the cushion C describes a path of movement the amplitude of which is a fraction (approximately of the order of a half when the intermediate zone 2c is about halfway between the ends 2a and 2b of the arm 2) of the amplitude of the path simultaneously described by the back D.

Indeed, the longitudinal movement of the seat S involves a swinging of the arm 2 about the lower hinge point 2a and, as the arm is rigid, the angular amplitude of the swinging movement of the arm 2 being the same, the amplitude of the paths of movement of the cushion C and the back D are respectively proportional to the distance separating the intermediate zone 2c from the lower hinge point 2a and to the distance separating the upper end 2b from the lower hinge point 2a.

As can be easily seen from Figures 1 to 3, when the seat S is moved forward, for example, from the most rearward position of Figure 1 to the most forward position of Figure 2, there is produced, in addition to a forward tilting movement of the cushion C which produces the raising of the rear area $C_B$, a reduction of the overall length of the upper surface C of the cushion. Indeed, during the forward displacement of the seat S, the back D moves further forward than the cushion C.

On the other hand, when the seat S is moved back, the cushion C is subject to a backward tilting movement, which produces a lowering of the rear area $C_B$, and, at the same time, the useful length of the upper surface of the cushion C is increased as the back D moves back to a greater extent than the cushion C.

Naturally, as the back D is supported by the arms 2 disposed at its two sides, the swinging of the arms consequent upon the movement of the cushion C produces a swinging of the back D which would tend to close forwardly when the seat S is moved forward, and open backwardly when the seat S is moved forward.

The adjustment device according to the invention, however, permits this induced swinging movement to be counteracted so that the back D retains a practically constant orientation relative to the structure of the motor vehicle during the longitudinal adjustment movement of the seat. At the same time, there is also a provision for the possibility of swinging the back D while holding the cushion C in fixed position, so as to enable the motorist to adjust the position of the back D to adapt it to his anthropometric characteristics and to his driving or travelling attitudes and tastes.

The heart of the adjustment device according to the invention is constituted by a motor 3, normally an electric motor, mounted on the cross member T beneath the cushion C.

The motor 3 can be rotated in two senses by the actuation of two push-buttons 4 and 5 disposed on one of the sides of the seat S in a position easily accessible to the person occupying the seat.

By means of a coupling member 6 which can be selectively disengaged by acting on a push-button 7 disposed adjacent the push-buttons 4 and 5, the motor 3 acts on a transmission mechanism 8 for causing the displacement of the cushion C in a longitudinal direction relative to the motor vehicle.

In the example illustrated, reference has been made – purely as an example – to a transmission mechanism comprising a worm screw 9 driven in rotation by the motor 3 through the coupling 6 and cooperating with a female thread 10 provided in a flange 11 secured below the cushion C.

Therefore, the arrangement is such that forward movement of the cushion is produced by rotation of the motor 3 in one direction, and rearward movement of the cushion C is produced by rotation of the motor 3 in the opposite direction.

As stated, this is a matter of a deliberately simplified illustration.

In particular, it may be advantageous to reverse the relative positions of the motor 3 and the flange 11, mounting the motor 3 on the cushion C and providing the reaction flange 11 on the structure of the motor vehicle, for example, making the flange 11 in the form of a cross member which extends to connect the swing arms 1.

The coupling member 6 is constituted, for example, by a gear with frontal teeth which can be brought selectively into a disengaged position by the actuation, through the push-button 7, of an electro-magnet fitted inside the member 6. This is a coupling device configuration already currently used in engineering and a more detailed description is not therefore necessary.

Another transmission mechanism, also controlled by the motor 3, is generally indicated 12.

In one possible embodiment, the mechanism 12 may be constituted by a flexible, "power-type" drive cable (that is, a flexible drive cable which can transmit a rotational movement about its longitudinal direction) which causes the rotation of another worm screw 13 fitted to one of the sides of the back D adjacent the point 2b where the back D is hinged to the upper end of the arm 2 with the ability to pivot about a horizontal axis.

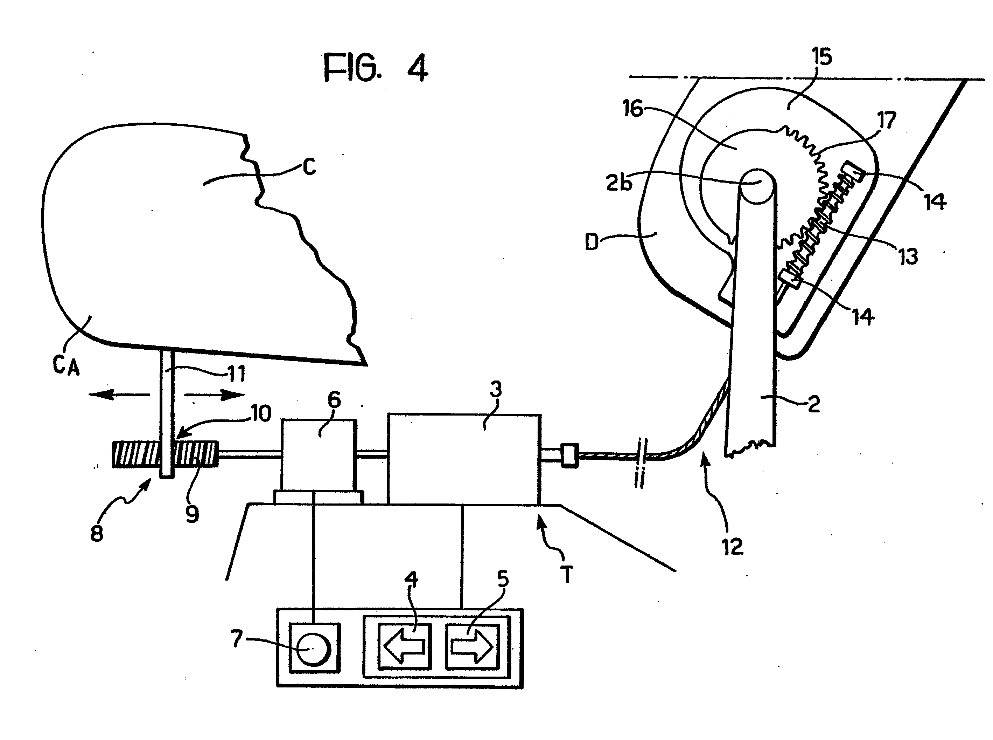

As shown better in the larger-scale view of Figure 4, the worm screw 13 may be held by supports 14 mounted on a plate 15 fixed rigidly to one of the sides of the back D.

On the other hand, a toothed wheel or, more simply, a toothed sector, indicated 16, is fixed relative to the arm 2 and is provided with teeth 17 meshing with the worm screw 13.

The back D can therefore be oriented relative to the arm 2, but the orienting movement is opposed by the mechanism made up of the worm screw 13 and the toothed sector 17.

The orienting of the back D relative to the arm 2 can be achieved only through a rotation of the worm screw 13 and a corresponding displacement of the plate 15 (and therefore of the back D) relative to the toothed sector 16 fixed to the arm 2.

The operating directions and transmission ratios of the first transmission mechanism 8 and of the second transmission mechanism 12 are determined (in dependence on the dimensions and therefore the paths of movement of the parts on which they act) in such a manner that, when it is actuated in either of the two directions of operation, the motor 3 causes through the mechanism 8 a longitudinal displacement of the cushion C and a consequent pivoting of the arm 2 by an angle of an amplitude $\alpha$, and the second mechanism 12 causes a relative rotation of the back D relative to the arm 2 of an amplitude-$\alpha$, that is a

rotation of an equal amplitude and opposite direction to the rotation imparted to the arm 2.

In this way, the tilting movement of the back D caused by the pivoting of the arm 2 described above is fully compensated and the back D retains, during the adjustment movement of the seat S in a longitudinal direction relative to the direction of the motor vehicle, a substantially constant orientation relative to the structure of the vehicle.

By acting on the push-button 7, the person occupying the seat S may put the gear of member 6 into the disengaged position. Thus, the rotation of the motor 3 is transmitted only to the mechanism 12 which acts upon the back.

The cushion C and the arm 2 (and therefore the seat overall) stay in a fixed longitudinal position relative to the structure of the motor vehicle but, as shown diagrammatically by the broken and chain lines in Figure 3, the back D may be pivoted forwardly or rearwardly at will (in dependence on the sense of rotation of the motor 3) so as completely to adapt the position of the back D to the anthropometric characteristics and the driving or travelling habits and tastes of the person occupying the seat.

Upon the release of the push-button 7, the member may be returned to its engaged position, restoring the conditions of operation in which the motor 3 makes it possible to adjust the longitudinal position of the seat S.

## Claims

1. A motor-driven adjustment device for motor vehicle seats (S) having a cushion (C) displaceable longitudinally relative to the structure of the vehicle and a back (D) selectively orientable relative to the cushion (C), characterised in that it comprises:
   – at least one swing arm (2) with a lower point (2a) of hinging to the structure of the vehicle (P), an upper point (2b) of hinging to the back (D), and an intermediate point (2c) of hinging to the cushion (C);
   – a selectively actuable motor unit (3);
   – a first motion transmission mechanism (8) interposed between the motor unit (3) and the cushion (C) of the seat (S), for causing, as a result of the actuation of the motor unit (3), the longitudinal movement of the cushion (C) relative to the structure of the vehicle (P) and a consequent angular displacement of the swing arm (2) relative to the structure of the vehicle (P);
   – a second motion transmission mechanism (12) interposed between the motor unit (3) and the back (D) of the seat (S), for causing, as a result of the actuation of the motor unit (3), an angular displacement of the back (D) relative to the swing arm (2) substantially identical and opposite to the consequent angular displacement of the swing arm (2) relative to the structure of the motor vehicle (P), so as to keep the back (D) in a substantially constant orientation relative to the structure of the motor vehicle (P), and
   – disengagement means (6) for the selective separation of the first motion transmission mechanism (8) from the motor unit (3) so as to cause, as a result of the actuation of the motor unit (3), the orientation of the back (D) relative to the swing arm (2) and the cushion (C) held in a fixed position relative to the structure of the motor vehicle (P).

2. An adjustment device according to claim 1, characterised in that the motor unit is an electric motor (3).

3. An adjustment device according to claim 1 or claim 2, characterised in that the first (8) and second (12) motion transmission mechanisms each comprise a worm screw (9, 13) which can be driven in rotation by the motor unit (3).

4. An adjustment device according to claim 3, characterised in that the second motion transmission mechanism (12) includes a toothed sector (16) cooperating with the worm screw (13) of the second mechanism (12), the toothed sector (16) and the worm screw (13) being mounted respectively on one and the other of the swing arm (2) and the back (D) of seat (S).

5. An adjustment device according to claim 3 or claim 4, characterised in that the second motion transmission mechanism (12) includes a flexible cable for transmitting a rotational movement between the motor unit (3) and the worm screw (13) of the second motion transmission mechanism.

6. An adjustment device according to any one of claims 1 to 5, characterised in that, between the motor unit (3) and the first motion transmission mechanism (8), there is disposed a gear coupling device (6) selectively movable (7) into a disengaged position.

## Patentansprüche

1. Eine motorgetriebene Einstellvorrichtung für Kraftfahrzeugsitze (S) mit einem relativ zum Fahrzeugaufbau längsverschiebbaren Kissen (C) und einer wahlweise relativ zum Kissen (C) orientierbaren Rückenlehne (D), gekennzeichnet durch
– wenigstens einen Schwenkarm (2) mit einer unteren Anlenkstelle (2a) am Aufbau des Fahrzeuges (P), einer oberen Anlenkstelle (2b) an der Rückenlehne (D) und einer mittleren Anlenkstelle (2c) am Kissen (C);
– eine wahlweise betätigbare Motoreinheit (3);
– eine erste Bewegungsübertragungs-Einrichtung (8), die zwischen der Motoreinheit (3) und dem Kissen (C) des Sitzes (S) angeordnet ist und als Folge der Betätigung der Motoreinheit (3) die Längsbewegung des Kissens (C) relativ zum Aufbau des Fahrzeuges (P) und eine sich ergebende Winkelverstellung des Schwenkarms (2) relativ zum Aufbau des Fahrzeuges (P) bewirkt;
– eine zweite Bewegungsübertragungs-Einrichtung (12), die zwischen der Motoreinheit (3) und der Rückenlehne (D) des Sitzes (S) angeordnet ist und als Folge der Betätigung der Motoreinheit (3) eine mit der sich ergebenden Winkelverstellung des Schwenkarms (2) relativ zum Aufbau des Kraftfahrzeuges (P) im wesentlichen identische und ihr gegenüber entgegengesetzte Winkelverstellung der Rückenlehne (D) relativ zum Schwenkarm (2) bewirkt, um die Rückenlehne (D) in einer im wesentlichen konstanten Orientierung relativ zum Aufbau des Kraftfahrzeuges (P) zu halten, und

– eine Entkupplungseinrichtung (6) zum wahlweisen Trennen der ersten Bewegungsübertragungs-Einrichtung (8) von der Motoreinheit (3), um als Folge der Betätigung der Motoreinheit (3) die Orientierung der Rückenlehne (D) relativ zum Schwenkarm (2) und Kissen (C), die in einer fixierten Stellung relativ zum Aufbau des Kraftfahrzeuges (P) gehalten sind, zu bewirken.

2. Eine Einstellvorrichtung nach Anspruch 1, dadurch gekennzeichnet, daß die Motoreinheit ein elektrischer Motor (3) ist.

3. Eine Einstellvorrichtung nach Anspruch 1 oder Anspruch 2, dadurch gekennzeichnet, daß die erste (8) und zweite (12) Bewegungsübertragungs-Einrichtung je eine Schnecke (9, 13) umfassen, die durch die Motoreinheit (3) in Rotation angetrieben werden kann.

4. Eine Einstellvorrichtung nach Anspruch 3, dadurch gekennzeichnet, daß die zweite Bewegungsübertragungs-Einrichtung (12) einen gezähnten Sektor (16) umfaßt, der mit der Schnecke (13) der zweiten Einrichtung (12) zusammenwirkt, wobei der gezähnte Sektor (16) und die Schnecke (13) an dem Schwenkarm (2) bzw. der Rückenlehne (D) des Sitzes (S) befestigt sind.

5. Eine Einstellvorrichtung nach Anspruch 3 oder Anspruch 4, dadurch gekennzeichnet, daß die zweite Bewegungsübertragungs-Einrichtung (12) ein flexibles Kabel zur Übertragung einer Drehbewegung zwischen der Motoreinheit (3) und der Schnecke (13) der zweiten Bewegungsübertragungs-Einrichtung umfaßt.

6. Eine Einstellvorrichtung nach einem der Ansprüche 1 bis 5, dadurch gekennzeichnet, daß zwischen der Motoreinheit (3) und der ersten Bewegungsübertragungs-Einrichtung (8) eine wahlweise in eine Trennstellung bewegbare (7) Zahnkupplungseinrichtung (6) angeordnet ist.

## Revendications

1. Dispositif de réglage mû par moteur pour sièges de véhicule automobile (S) comportant un coussin (C) déplaçable longitudinalement par rapport à la structure de véhicule et un dossier (D) orientable sélectivement par rapport au coussin (C), caractérisé en ce qu'il comprend:
– au moins un bras oscillant (2) présentant un point inférieur (2a) d'articulation sur la structure du véhicule (P), un point supérieur d'articulation (2b) sur le dossier (D) et un point intermédiaire d'articulation (2c) sur le coussin (C);
– un élément moteur à commande sélective (3),
– un premier mécanisme de transmission de mouvement (8) interposé entre l'élément moteur (3) et le coussin (C) du siège (S) pour provoquer, en réponse à la mise en action de l'élément moteur (3), le déplacement longitudinal du coussin (C) par rapport à la structure du véhicule (P) et un déplacement angulaire conséctuif de bras oscillant (2) par rapport à la structure du véhicule (P);
– un second mécanisme de transmission de mouvement (12) interposé entre l'élément moteur (3) et le dossier (D) du siège (S) pour provoquer, en réponse à la mise en action de l'élément moteur (3), un dé-

placement angulaire du dossier (D) par rapport au bras oscillant (2) sensiblement identique et opposé au déplacement angulaire consécutif de bras oscillant (2) par rapport à la structure du véhicule automobile (P) de façon à conserver au dossier (D) une orientation sensiblement constante par rapport à la structure de véhicule automobile (P); et
— des moyens de dégagement pour séparer sélectivement le premier mécanisme de transmission (8) d'avec l'élément moteur (3) de façon à provoquer, en réponse à la mise en action de l'élément moteur (3), l'orientation de dossier (D) par rapport au bras oscillant (2) et au coussin (C) maintenu en position fixe par rapport à la structure du véhicule automobile (P).

2. Dispositif de réglage selon la revendication 1, caractérisé en ce que l'élément moteur est un moteur électrique (3).

3. Dispositif de réglage selon la revendication 1 ou la revendication 2, caractérisé en ce que le premier (8) et le second (12) mécanismes de transmission de mouvement comprennent chacun une vis sans fin (9, 13) qui peut être entraînée en rotation par l'élément moteur (3).

4. Dispositif de réglage selon la revendication 3, caractérisé en ce que le second mécanisme de transmission de mouvement (12) comporte un secteur denté (16) coopérant avec la vis sans fin (13) du second mécanisme (12), le secteur denté (16) et la vis sans fin (13) étant montés respectivement sur l'un et sur l'autre du bras oscillant (2) et du dossier (D) du siège (S).

5. Dispositif d'ajustement selon la revendication 3 ou la revendication 4, caractérisé en ce que le second mécanisme de transmission de mouvement (12) comporte un câble flexible pour la transmission d'un mouvement de rotation entre l'élément moteur (3) et la vis sans fin (13) du second mécanisme de transmission de mouvement.

6. Dispositif de réglage selon l'une quelconque des revendications 1 à 5, caractérisé en ce qu'entre l'élément moteur (3) et le premier mécanisme de transmission de mouvement (8) est interposé un dispositif d'accouplement à engrenage (6) pouvant être mis sélectivement (7) en position de désengrenage.

EP 0 232 685 B1

FIG. 1

FIG. 2

FIG. 3

# FIG. 4

EP 0 232 685 B1